# FASCICULE DE BREVET EUROPEEN

(11) **EP 2 574 401 B1**
(45) Date de publication et mention de la délivrance du brevet: **04.06.2014**
(21) Numéro de dépôt: 12199690.4
(22) Date de dépôt: 16.05.2007
(51) Int. Cl.: B01L 3/00

(54) **Procédé de fusion de gouttes dans un circuit microfluidique**
Methode zum Verschmelzen von Tropfen in einem mikrofluidischem Kreis
Method for Merging Drops in a Microfluid Circuit

(30) Priorité: 30.05.2006 FR 0604819
(43) Date de publication de la demande: 03.04.2013
(62) Demande divisionnaire de: 07731474.8
(73) Titulaire: Centre National de la Recherche Scientifique, 75794 Paris Cedex 16 (FR); Ecole Polytechnique, 91128 Palaiseau Cedex (FR)
(72) Inventeur: Baroud, Charles, 75013 PARIS (FR); Delville, Jean-Pierre, 33400 TALENCE (FR)
(74) Mandataire: Ramey, Daniel

(56) Documents cités:
- WO-A2-2005/069964
- FR-A- 2 873 171
- US-A1- 2003 047 688

## Description

L'invention concerne un procédé de traitement de gouttes dans un circuit microfluidique qui comprend au moins un microcanal contenant un fluide et des gouttes d'un second fluide contenues dans le premier fluide.

On connaît, par la demande de brevet FR-A-2873171 des demandeurs, un circuit microfluidique réalisé en un matériau approprié tel par exemple que du PDMS (poly-dimethylsiloxane) comportant des microcanaux ayant typiquement une largeur d'environ 100µm et une profondeur de 50µm, dans lesquels on peut faire passer des débits très faibles de fluides tels que de l'air, de l'eau, de l'huile, des réactifs, etc. Un faisceau laser dont la longueur d'onde n'est pas absorbée par le matériau constitutif du circuit, est focalisé sur l'interface d'un premier fluide s'écoulant dans un microcanal et d'un second fluide présent au moins localement dans ce microcanal, pour forcer ou pour arrêter l'écoulement du premier fluide dans le microcanal, pour le fractionner en gouttes, pour le mélanger au second fluide, etc, la focalisation du faisceau laser sur l'interface des fluides créant un gradient de température le long de cette interface et provoquant un mouvement des fluides par convection thermocapillaire.

Il est également connu dans la technique les documents WO 2005/069964 et US 2003/047688 qui décrivent des méthodes de mise en mouvement de gouttes sur un plan dans le but de les faire rentrer en collision et d'induire une fusion. Cependant, ces méthodes ne permettent pas de réaliser une fusion entre des gouttes se trouvant dans un état relatif quasi-immobile dans un circuit microfluidique.

La présente invention a pour objet des développements et des applications particulières de la technique décrite dans le document FR-A-2873171.

Elle propose un procédé de traitement de gouttes dans un circuit microfluidique comprenant au moins un microcanal contenant un premier fluide et des gouttes d'un second fluide contenues dans le premier fluide, ce procédé comprenant une étape de focalisation d'un faisceau laser sur des interfaces desdites gouttes et du premier fluide, caractérisé en ce qu'il consiste à utiliser la sensibilité des tensions de surface desdits fluides à la chaleur résultant de la focalisation du faisceau laser sur les interfaces des gouttes pour fusionner ces gouttes quand elles contiennent des fluides différents, la longueur d'onde du faisceau laser étant choisie pour être absorbée par le second fluide contenu dans les gouttes ou par les fluides différents contenus dans les gouttes, respectivement, le premier fluide et le matériau constitutif du microcanal étant transparents à cette longueur d'onde.

L'invention permet, par focalisation d'un faisceau laser sur des interfaces de gouttes de fluide, de réaliser de façon simple et efficace des opérations qui n'étaient pas possibles dans la technique antérieure ou qui nécessitaient l'utilisation de moyens lourds et complexes, à savoir fusionner des gouttes contenant des fluides différents et ainsi former des séries de microréacteurs quand les fluides réagissent l'un sur l'autre ou les uns avec les autres, ce qui n'était pas possible avec les moyens de la technique antérieure.

Selon une caractéristique de l'invention, ce procédé consiste, pour fusionner deux gouttes contenant des fluides différents, à mettre les gouttes en contact l'une avec l'autre dans un écoulement du premier fluide, puis à focaliser le faisceau laser sur l'interface des deux gouttes. Les fluides différents peuvent être des solutions différentes, formées de solutés différents contenus dans un même solvant.

On peut par exemple bloquer le transport d'une première goutte dans le microcanal précité par focalisation du faisceau laser sur l'interface aval de cette goutte et du premier fluide jusqu'à l'arrivée d'une seconde goutte contenant un fluide différent de celui de la première goutte, puis focaliser le faisceau laser sur l'interface des deux gouttes pour les fusionner.

Les fluides contenus dans ces gouttes sont miscibles et la focalisation du faisceau laser sur les interfaces des gouttes réalise le mélange de ces fluides.

Selon un aspect particulièrement intéressant de l'invention, les fluides contenus dans les gouttes réagissent l'un avec l'autre, les gouttes fusionnées formant des microréacteurs.

On peut faire varier la taille des gouttes à fusionner, pour faire varier les quantités des réactifs mélangés lors de la fusion des gouttes.

Par ailleurs, au moins une des gouttes à fusionner peut contenir au moins deux fluides différents qui sont mélangés l'un avec l'autre lorsque le faisceau laser est focalisé sur une interface de cette goutte.

La réaction des fluides contenus dans les gouttes fusionnées peut être initiée par le faisceau laser focalisé sur les interfaces des gouttes.

On peut ensuite surveiller les réactions qui se déroulent dans les gouttes fusionnées en observant au microscope, de façon continue ou discontinue, au moins une partie du trajet parcouru par les gouttes dans le circuit microfluidique.

L'invention sera mieux comprise et d'autres caractéristiques, détails et avantages de celle-ci apparaîtront plus clairement à la lecture de la description qui va suivre, faite à titre d'exemple en référence aux dessins annexés dans lesquels :
- la figure 1 représente schématiquement le tri de gouttes dans un circuit microfluidique (pas selon l'invention) ;
- les figures 2, 3 et 4 représentent schématiquement la formation de nano-gouttes dans un circuit microfluidique (pas selon l'invention) ;
- la figure 5 représente schématiquement différentes phases de la fusion de gouttes dans un circuit microfluidique selon l'invention.

Comme indiqué dans la demande de brevet antérieure FR-A-2873171 des demandeurs, le circuit microfluidique utilisé dans l'invention est formé par exemple par une plaque 10 d'un matériau approprié, tel qu'un polymère du type poly-diméthylsiloxane (PDMS) par utilisation d'une technique courante de lithographie souple.

Les microcanaux 12 peuvent être formés à la surface de la plaque 10, sur laquelle est collée une lame de microscope en verre. Typiquement, les microcanaux 12 ont une largeur de 100µm environ et une profondeur de 50µm. Ces dimensions peuvent être toutefois être très largement variables entre une échelle nanométrique et une échelle millimétrique.

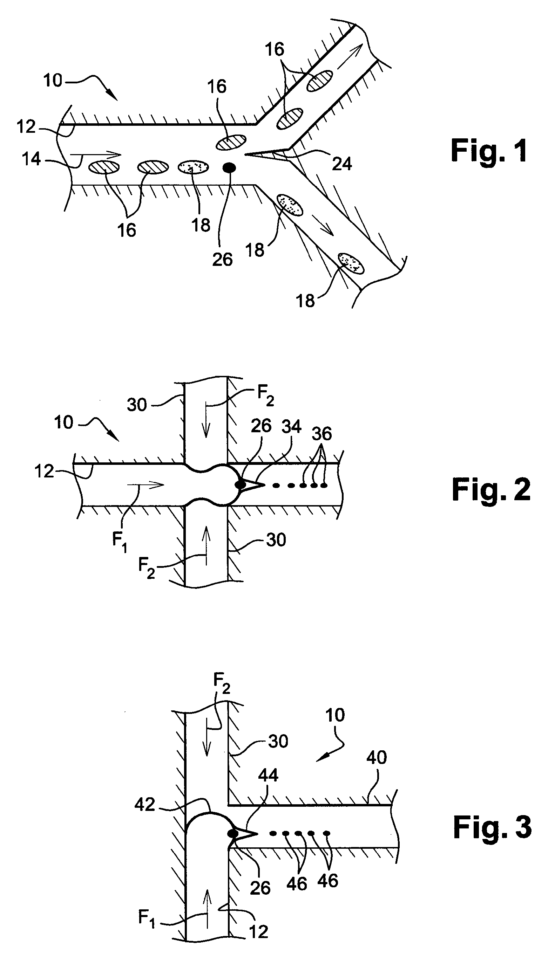

En figure 1, la partie représentée du circuit microfluidique comprend un microcanal 12 parcouru par un écoulement 14 d'un fluide tel que de l'eau, de l'huile, un réactif liquide, etc, contenant des gouttes ou des bulles 16 d'un second fluide et des gouttes ou des bulles 18 d'un troisième fluide qui ont été représentées de façon différente, les unes avec des hachures et les autres avec des pointillés pour être plus facilement distinguées les unes des autres.

Pour le tri des gouttes 16 et 18 dans l'écoulement 14, le microcanal 12 se partage en aval en deux microcanaux 20, 22 en formant un embranchement en Y dont le sommet peut comporter une pointe 24 orientée vers l'amont, qui s'étend sensiblement au milieu du microcanal 12 dans le sens orienté à l'opposé de l'écoulement 14. Cette pointe 24 n'est pas indispensable mais facilite la déviation des gouttes.

Le tri est réalisé par focalisation d'un faisceau laser approprié 26 sur l'interface d'une goutte 16 ou 18 et du fluide formant l'écoulement 14, ce faisceau laser étant produit par exemple par un générateur à argon ionisé à émission continue ou pulsée avec une fréquence de répétition supérieure à 1 kHz environ, par exemple avec une longueur d'onde de 514nm et une puissance comprise entre 10 et 50mW. On peut également utiliser une diode laser ou un laser du type YAG, par exemple.

La tâche du faisceau laser 26 qui correspond à l'impact de ce faisceau sur l'interface d'une goutte 16 ou 18, a un diamètre de l'ordre de 5 à 15µm par exemple.

La longueur d'onde du faisceau laser est choisie pour ne pas être absorbée par le matériau constitutif du circuit microfluidique, par le fluide formant l'écoulement 14 et par le fluide constituant les gouttes ou les bulles 18. Cette longueur d'onde est par contre absorbée par le fluide formant les bulles ou gouttes 16.

Le faisceau laser est focalisé en un point qui est situé en amont de l'extrémité de la pointe 24 séparant les microcanaux 20 et 22, du côté du microcanal 12 qui est opposé à la direction du microcanal 20 dans lequel on veut dévier les bulles ou gouttes 16.

La focalisation en ce point du faisceau laser 26 sur l'interface d'une goutte ou bulle 16 et du fluide formant l'écoulement 14, produit un gradient de température le long de cet interface, qui provoque un mouvement du fluide formant la bulle ou goutte 16 par convection thermocapillaire et dévie la bulle ou goutte 16 vers le microcanal 20, cette déviation étant facilitée par la pointe 24.

Les bulles ou gouttes 18 de l'autre fluide sont transparentes au faisceau laser et ne sont pas déviées. Elles sont en conséquence transportées par l'écoulement 14 dans le microcanal 22.

L'utilisation d'un faisceau laser ayant une longueur d'onde d'environ 514nm permet par exemple de trier des gouttes contenant de la fluorescéine qui absorbe cette longueur d'onde et des gouttes d'eau pure, qui sont transparentes à cette longueur d'onde. Le faisceau laser focalisé sur le trajet de ces gouttes permet de dévier celles contenant de la fluorescéine et de les envoyer dans un autre microcanal que celui qu'elles auraient emprunté normalement.

En utilisant un laser ayant une longueur d'onde de l'ordre de 1480nm, on peut dévier des gouttes d'eau et laisser passer des gouttes d'huile.

On peut également trier des bulles d'air pour les éliminer d'un écoulement, en utilisant un faisceau laser dont la longueur d'onde est absorbée par l'azote, par exemple.

En variante, on peut déposer un point de matière absorbant la longueur d'onde du faisceau laser sur la surface du microcanal 12 pour chauffer localement le fluide qui passe dans ce microcanal, même si ce fluide n'absorbe pas la longueur d'onde du faisceau laser. On peut alors dévier certaines gouttes ou bulles en dirigeant le faisceau laser sur le point de matière absorbante quand ces bulles ou gouttes arrivent au niveau de ce point. On peut également, pour cela, mettre en route et arrêter le générateur laser aux moments voulus.

Pour trier des fluides en fonction de la sensibilité de leur tension de surface à la chaleur, la puissance du faisceau laser utilisé est réglée pour produire un gradient de tension de surface sur une interface entre deux fluides, qui est suffisant pour dévier une bulle ou une goutte contenant l'un de ces deux fluides, et qui serait trop faible pour produire une déviation d'une interface entre deux autres fluides. On peut par exemple dévier ainsi des bulles d'air contenues dans un écoulement de liquide, en utilisant un faisceau laser dont la puissance est suffisante pour produire un gradient de tension de surface du niveau voulu sur une interface liquide-air et qui n'a pas d'effet de déviation sur une interface liquide-liquide.

On peut aussi ajouter dans des liquides des produits tensioactifs appropriés qui vont permettre d'agir avec le faisceau laser sur des interfaces liquide-liquide pour dévier des gouttes de liquide sans dévier des bulles de gaz.

La figure 2 représente un mode de formation de nano-gouttes à partir d'un écoulement d'un fluide F1 dans un microcanal 12 du circuit 10 au moyen d'un écoulement d'un autre fluide F2 dans deux microcanaux 30 qui sont alignés et perpendiculaires au microcanal 12 de part et d'autre de celui-ci. Le fluide F2 contient un produit tensioactif et n'est pas miscible avec le fluide F1.

Un faisceau laser 26 dont la longueur d'onde n'est pas absorbée par le circuit microfluidique et par le fluide F2 et est absorbée par le fluide F1 est focalisé en un point central du microcanal 12 immédiatement en aval du croisement avec les microcanaux 30 pour bloquer l'écoulement du fluide F1 dans le microcanal 12 en aval du croisement précité.

Le fluide F1 forme une goutte 32 sensiblement au niveau de l'intersection des microcanaux 12 et 30, cette goutte étant retenue par le faisceau laser 26 focalisé à l'interface aval entre cette goutte et le fluide F2. L'écoulement du fluide F2 sur cette goutte produit une pointe très fine 34 dont de très petites gouttes 36 sont détachées par entraînement par le fluide F2, ces petites gouttes 36 ayant une taille typiquement égale à la taille de la pointe 34, c'est-à-dire des dimensions très inférieures à celles de la goutte 32. Typiquement, ces petites gouttes 36 peuvent avoir une taille cent fois inférieure à celle de la goutte 32 et sont appelées nano-gouttes.

Dans un exemple de réalisation, le fluide F1 est de l'eau, le fluide F2 de l'huile contenant une faible quantité (2% en masse) d'un tensioactif tel que celui connu sous la dénomination SPAN 80, le faisceau laser 26 utilisé pour bloquer la goutte 32 a une puissance de l'ordre de 20 à 50 mW, le débit d'eau dans le microcanal 12 est de l'ordre de 0,2 microlitre/minute et le débit d'huile et de tensioactif dans les microcanaux 30 est de l'ordre de 0,9 microlitre/minute. Les nano-gouttes 36 produites ont une dimension de l'ordre de 1000nm.

Dans la variante de réalisation de la figure 3, le fluide F1 et le fluide F2 s'écoulent en sens opposé l'un de l'autre dans deux microcanaux 12, 30 alignés, qui communiquent à leur jonction avec un troisième microcanal perpendiculaire 40. Le faisceau laser 26 est focalisé sur l'interface d'une goutte 42 du fluide F1 qui est formée au débouché du microcanal 12 et qui est retenue par le faisceau laser.

Comme précédemment, il se forme sur l'interface de la goutte 42 une pointe très fine 44 orientée vers l'aval dans le microcanal 40 et dont des nano-gouttes 46 sont détachées par l'écoulement de fluide F2 contenant le produit tensioactif.

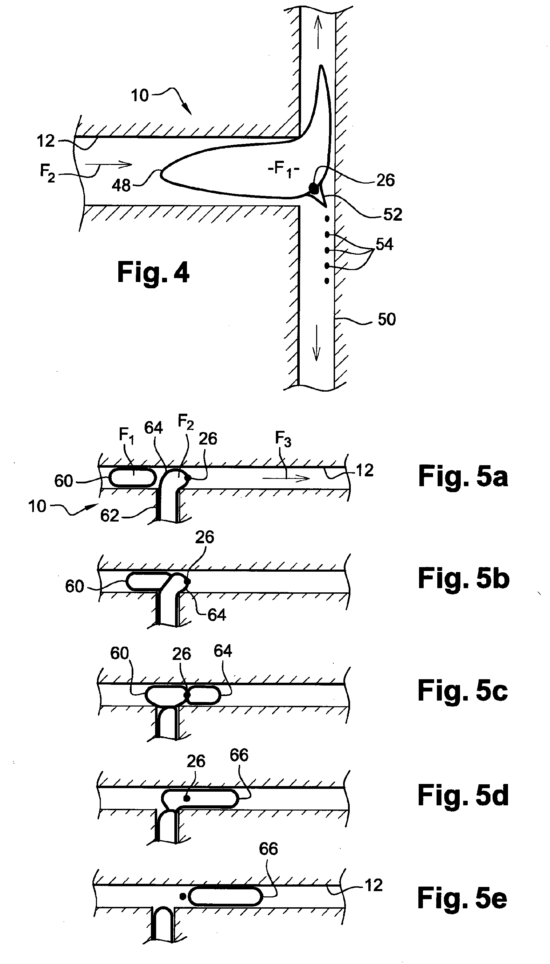

Dans la variante de la figure 4, une goutte 48 du fluide F1 est contenue dans un écoulement du fluide F2 passant dans un microcanal 12 qui se partage en aval en deux microcanaux 50 perpendiculaires au microcanal 12 et opposés l'un à l'autre. La goutte 48 de fluide F1 est déviée dans l'un des microcanaux 50 par focalisation du faisceau laser 26 en un point de son interface avec le fluide F2, du côté situé vers l'autre microcanal 50. Il se forme au niveau du point d'impact du faisceau laser 26 une pointe 52 très fine orientée vers l'aval de cet autre microcanal 50 et dont des nano-gouttes 54 sont détachées par l'écoulement du fluide F2.

On peut ainsi former des nano-gouttes 36, 46 et 54 qui sont enrobées du produit tensioactif et qui sont destinées par exemple à être analysées, lorsqu'il s'agit de prélèvements effectués sur une goutte du fluide F2, ou qui sont destinées à un autre usage, par exemple à des réactions chimiques.

La focalisation d'un faisceau laser de longueur d'onde appropriée sur l'interface de deux gouttes permet par ailleurs de fusionner ces deux gouttes, comme cela a été représenté schématiquement en figure 5.

De façon générale, il est difficile, voire impossible, dans la technique antérieure de fusionner des gouttes contenant des fluides différents et qui sont transportés par un troisième fluide, car non seulement les flux des trois fluides interagissent de façon dynamique, mais de plus le troisième fluide forme un film de séparation entre les gouttes contenant les premier et deuxième fluides.

Selon l'invention, la focalisation d'un faisceau laser sur l'interface entre deux gouttes permet de produire un écoulement qui dégage le film du troisième fluide séparant les deux gouttes et qui permet ainsi leur fusion.

Dans l'exemple de réalisation de la figure 5, un premier fluide F1 est contenu dans une goutte 60 transportée par un écoulement de fluide F3 dans un microcanal 12, dans lequel débouche un microcanal 62 parcouru également par un écoulement du fluide F3 et contenant des gouttes 64 d'un autre fluide F2 (le microcanal 62 pouvant en variante être parcouru par un écoulement du fluide F2), les fluides F1 et F2 étant miscibles.

En figure 5a, la focalisation d'un faisceau laser 26 sur l'interface d'une goutte 64 du fluide F2 sortant du microcanal 62, légèrement en aval du débouché de ce microcanal dans le premier microcanal 12, permet de bloquer la goutte 64 jusqu'à l'arrivée d'une goutte 60 du fluide F1.

Quand cette goutte 60 percute la partie de la goutte 64 de fluide F2 qui se trouve dans le microcanal 12 comme représenté en figure 5b, les deux gouttes 60 et 64 commencent à avancer ensemble dans le microcanal 12 jusqu'à ce que leur interface de contact traverse le faisceau laser 26 comme représenté en figure 5c.

A ce moment, l'écoulement induit par le chauffage de l'interface par le faisceau laser provoque la fusion des deux gouttes en une goutte unique 66 comme représenté en figure 5d et le mélange des fluides F1 et F2 à l'intérieur de cette goutte unique.

Ensuite, comme représenté en figure 5e, la goutte unique 66 est entraînée par l'écoulement du fluide F3 dans le microcanal 12.

Cette goutte unique 66 forme un microréacteur lorsque les fluides F1 et F2 mélangés réagissent l'un avec l'autre.

La réaction peut être surveillée par observation de la goutte 66 au microscope, le long de son trajet dans le microcanal 12. Eventuellement, ce trajet peut être déterminé pour que la goutte 66 reste dans le champ d'observation du microscope ou repasse à intervalles réguliers dans ce champ d'observation.

On comprend que l'on peut faire varier à volonté les tailles des gouttes 60 et 64 contenant les fluides F1 et F2 et donc faire varier à volonté les quantités de ces fluides qui réagissent l'un avec l'autre dans la goutte unique 66. Cela permet d'effectuer très rapidement des séries de réactions avec des concentrations variables de réactifs.

L'action du faisceau laser 26 à l'intérieur de la goutte 66 permet également, par chauffage, d'initier la réaction entre les fluides F1 et F2. Cette action a également pour effet de produire un mélange de ces fluides à l'intérieur de la goutte unique 66.

On peut également prévoir qu'une des gouttes 60 et 64 contienne, non pas un fluide unique mais deux fluides différents, qui peuvent être mélangés par action du faisceau laser 26 sur la goutte qui les contient.

Les gouttes 66 qui forment des microréacteurs ont typiquement des volumes de l'ordre du nanolitre ou même du picolitre.

On voit que, de façon générale, le faisceau laser agissant sur l'interface d'une goutte ou d'une bulle de fluide peut être utilisé comme un actionneur intelligent ayant un nombre important de fonctions telles que le blocage de la goutte, la déviation de la goutte, la formation de nano-gouttes, la fusion de la goutte avec une autre goutte, le mélange du ou des fluides contenus dans la goutte, et le déclenchement d'une réaction chimique dans la goutte.

## Revendications

1. Procédé de traitement de gouttes dans un circuit microfluidique comprenant au moins un microcanal (12) contenant un premier fluide et des gouttes (16, 18) d'au moins un second fluide contenues dans le premier fluide par focalisation d'un faisceau laser sur des interfaces desdites gouttes et du premier fluide, la longueur d'onde du faisceau laser étant choisie pour être absorbée par le second fluide contenu dans les gouttes ou par les fluides différents contenus dans les gouttes, respectivement, le premier fluide et le matériau constitutif du microcanal (12) étant transparents à cette longueur d'onde, **caractérisé en ce qu'**il consiste à utiliser la sensibilité des tensions de surface desdits fluides à la chaleur résultant de la focalisation du faisceau laser sur les interfaces pour fusionner ces gouttes quand elles contiennent des fluides différents, en mettant deux gouttes en contact l'une avec l'autre dans un écoulement du premier fluide (F3), puis à focaliser le faisceau laser (26) sur l'interface des gouttes (60, 64).

2. Procédé selon la revendication 1, **caractérisé en ce qu'**il consiste à bloquer le transport d'une goutte (64) dans le microcanal (12) par focalisation du faisceau laser (26) sur l'interface aval de cette goutte et du fluide de transport (F3) jusqu'à l'arrivée d'une autre goutte contenant un fluide (F1) différent de celui de la première goutte (64), puis à focaliser le faisceau laser (26) sur l'interface des deux gouttes.

3. Procédé selon la revendication 1 ou 2, **caractérisé en ce que** les fluides (F1, F2) contenus dans les gouttes sont miscibles.

4. Procédé selon l'une des revendications 1 à 3, **caractérisé en ce que** les fluides (F1, F2) contenus dans les gouttes (60, 64) réagissent l'un avec l'autre et **en ce que** les gouttes fusionnées (66) forment des microréacteurs.

5. Procédé selon la revendication 4, **caractérisé en ce qu'**il consiste à faire varier la taille des gouttes (60, 64) à fusionner, pour faire varier les quantités des réactifs mélangés lors de la fusion des gouttes.

6. Procédé selon l'une des revendications 1 à 5, **caractérisé en ce qu'**au moins une des gouttes à fusionner contient au moins deux fluides différents, qui sont mélangés l'un avec l'autre lors de la focalisation du faisceau laser (26) sur la goutte.

7. Procédé selon l'une des revendications 4 à 6, **caractérisé en ce que** la réaction des fluides (F1, F2) contenus dans deux gouttes fusionnées est initiée par le faisceau laser focalisé sur ces gouttes.

8. Procédé selon l'une des revendications 4 à 7, **caractérisé en ce qu'**il consiste à surveiller la réaction des fluides (F1, F2) dans les gouttes fusionnées par observation au microscope de ces gouttes, de façon continue ou discontinue, sur au moins une partie du trajet parcouru par ces gouttes dans le circuit microfluidique.

## Patentansprüche

1. Verfahren zum Verarbeiten von Tröpfchen in einem mikrofluidischem Schaltkreis mit zumindest einem Mikrokanal (12), der ein erstes Fluid und Tröpfchen (16, 18) zumindest eines zweiten Fluids enthält, die im ersten Fluid enthalten sind, durch Fokussierung eines Laserstrahls auf Grenzflächen der Tröpfchen und des ersten Fluids, wobei die Wellenlänge des Laserstrahls so ausgewählt ist, dass sie von dem in den Tröpfchen enthaltenen zweiten Fluid bzw. von den in den Tröpfchen enthaltenden, verschiedenen Fluids absorbiert wird, wobei das erste Fluid und das Material, aus dem der Mikrokanal (12) besteht, für diese Wellenlänge transparent sind, **dadurch gekennzeichnet, dass** es darin besteht, die Empfindlichkeit der Oberflächenspannungen der Fluide gegenüber Wärme zu nutzen, die sich aus der Fokussierung des Laserstrahls auf die Grenzflächen ergibt, um diese Tröpfchen zu vereinigen, wenn sie verschiedene Fluide enthalten, indem in einer Strömung des ersten Fluids (F3) zwei Tröpfchen miteinander in Kontakt gebracht werden, und dann den Laserstrahl (26) auf die Grenzfläche der Tröpfchen (60, 64) zu fokussieren.

2. Verfahren nach Anspruch 1, **dadurch gekennzeichnet, dass** es darin besteht, den Transport eines Tröpfchens (64) in dem Mikrokanal (12) durch Fokussierung des Laserstrahls (26) auf die stromabwärtige Grenzfläche dieses Tröpfchens und des Transportfluids (F3) bis zum Eintreffen eines weiteren Tröpfchens zu blockieren, das ein Fluid (F1) enthält, das von dem des ersten Tröpfchens (64) verschieden ist, und dann den Laserstrahl (26) auf die Grenzfläche der beiden Tröpfchen zu fokussieren.

3. Verfahren nach Anspruch 1 oder 2, **dadurch gekennzeichnet, dass** die in den Tröpfchen enthaltenen Fluide (F1, F2) mischbar sind.

4. Verfahren nach einem der Ansprüche 1 bis 3, **dadurch gekennzeichnet, dass** die in den Tröpfchen (60, 64) enthaltenen Fluide (F1, F2) miteinander reagieren und dass die vereinigten Tröpfchen (66) Mikroreaktoren bilden.

5. Verfahren nach Anspruch 4, **dadurch gekennzeichnet, dass** es darin besteht, die Größe der zu vereinigenden Tröpfchen (60, 64) zu variieren, um die Mengen der bei der Vereinigung der Tröpfchen vermischten Reaktanten zu variieren.

6. Verfahren nach einem der Ansprüche 1 bis 5, **dadurch gekennzeichnet, dass** zumindest eines der zu vereinigenden Tröpfchen zumindest zwei verschiedene Fluide enthält, die bei der Fokussierung des Laserstrahls (26) auf das Tröpfchen miteinander vermischt werden.

7. Verfahren nach einem der Ansprüche 4 bis 6, **dadurch gekennzeichnet, dass** die Reaktion der Fluide (F1, F2), die in den beiden vereinigten Tröpfchen enthalten sind, durch den auf diese Tröpfchen fokussierten Laserstrahl initiiert wird.

8. Verfahren nach einem der Ansprüche 4 bis 7, **dadurch gekennzeichnet, dass** es darin besteht, die Reaktion der Fluide (F1, F2) in den vereinigten Tröpfchen durch Beobachtung dieser Tröpfchen unter dem Mikroskop durchgehend oder unterbrochen zu überwachen, und zwar über zumindest einen Teil der Wegstrecke, die von diesen Tröpfchen in dem mikrofluidischen Schaltkreis zurückgelegt wird.

## Claims

1. A method for treating drops in a microfluid circuit comprising at least one microchannel (12) containing a first fluid and drops (16, 18) of at least a second fluid contained in the first fluid by focusing a laser beam on interfaces of said drops and of the first fluid, the wavelength of the laser beam being selected to be absorbed by the second fluid contained in the drops or by the different fluids contained in the drops, respectively, the first fluid and the constitutive material of the microchannel (12) being transparent to this wavelength, **characterized in that** said method consists in using the sensitivity of the surface tensions of said fluids to the heat resulting from focusing the laser beam on the interfaces to fuse those drops when they contain different fluids, bringing two drops in contact one with the other in a flow of the first fluid (F3), and then in focusing the laser beam (26) on the interface of the drops (60, 64).

2. A method according to claim 1, **characterized in that** it consists in blocking the transport of a drop (64) in the microchannel (12) by focusing the laser beam (26) on the downstream interface of said drop and of the transport fluid (F3) until the arrival of another drop containing a fluid (F1) different of that of the first drop (64), and then in focusing the laser beam (26) on the interface of said two drops.

3. A method according to claim 1 or 2, **characterized in that** the fluids (F1, F2) contained in the drops are miscible

4. A method according to claims 1 to 3, **characterized in that** the fluids (F1, F2) contained in the drops (60, 64) react one with the other and **in that** the fused drops (66) generate microreactors.

5. A method according to claim 4, **characterized in that** it consists in varying the size of the drops (60, 64) to be fused, in order to vary the quantities of the reagents mixed when the drops are fused.

6. A method according to one of claims 1 to 5, **characterized in that** at least one of the drops to be fused contains at least two different fluids, which are mixed one with the other when the laser beam (26) is focused on the drop.

7. A method according to one of claims 4 to 6, **characterized in that** the reaction of the fluids (F1, F2) contained in two fused drops is initiated by the laser beam focused on said two drops.

8. A method according to one of claims 4 to 7, **characterized in that** it consists in monitoring the reaction of the fluids (F1, F2) in the fused drops by examining said drops with a microscope, in a continuous or discontinuous manner, on at least a part of the path followed by said drops in the microfluid circuit.
